# EUROPEAN PATENT SPECIFICATION

(11) **EP 4 135 440 B1**
(45) Date of publication and mention of the grant of the patent: **22.04.2026**
(21) Application number: 20930299.1
(22) Date of filing: 06.04.2020
(51) Int. Cl.: H04W 72/04, H04W 28/20

(54) **TERMINAL AND BASE STATION DEVICE**
ENDGERÄT UND BASISSTATIONSVORRICHTUNG
TERMINAL ET DISPOSITIF DE STATION DE BASE

(43) Date of publication of application: 15.02.2023
(73) Proprietor: NTT DOCOMO, INC., Chiyoda-Ku Tokyo 100-6150 (JP)
(72) Inventor: TAKAHASHI, Hideaki, Tokyo 100-6150 (JP); HANAKI, Akihito, Tokyo 100-6150 (JP)
(74) Representative: Hoffmann Eitle
(86) International application number: PCT/JP2020/015563
(87) International publication number: WO 2021/205519

(56) References cited:
- EP-A1- 3 606 228
- WO-A1-2020/041966
- HUAWEI, HUAWEI DEVICE: "Summary of email discussion [107bis#47][NR TEI16] Overheating reporting in (NG)EN-DC", 3GPP DRAFT; R2-1915259, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, US; 20191118 - 20191122, 13 November 2019 (2019-11-13), Mobile Competence Centre ; 650, route des Lucioles ; F-06921 Sophia-Antipolis Cedex ; France , XP051824873
- HUAWEI, HISILICON: "Report for [Post109bis-e][050][TEI16] Overheating", 3GPP DRAFT; R2-2005401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic; 20200601 - 20200612, 28 May 2020 (2020-05-28), Mobile Competence Centre ; 650, route des Lucioles ; F-06921 Sophia-Antipolis Cedex ; France , XP051892024

## Description

### [Technical Field]

The present invention relates to a terminal in a wireless communication system and a base station apparatus.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving are being introduced and further considered.

On the other hand, in order to suppress overheating when the user terminal generates heat, overheating assistance information, which reports a peak rate (UE category), and a recommended value of the number of SCells in Carrier Aggregation from the user terminal, is specified for LTE in Rel-14. It is assumed that the value reported by the overheating assistance information is lower than that of the normal condition before the heating occurs.

In Rel-15, the overheating assistance information is extended to apply to EN-DC (Non-Patent Document 1 and Non-Patent Document 2). Specifically, in the case of EN-DC, each of the reportable reducedCCsDL and reducedCCsUL is extended to include (P) SCell of both LTE and NR (Non-patent Document 1 and Non-patent Document 2).

The base station apparatus (eNB) receives the overheat assistance information from the UE performing EN-DC and obtains the number of SCells of DL and UL desired by the user terminal from the reducedCCsDL and reducedCCsUL.

Non-Patent Document 4 describes methods to address an overheating problem in EN-DC using reporting of some assistance information for SCG configuration, either with a master node-aware solution or with a master node-transparent solution.

Patent Document EP3606228 A1 describes a method including that: in a multi-connection scene including a Long Term Evolution (LTE) network and a New Radio (NR) network, a secondary serving base station sends, according to a local Secondary Cell Group (SCG) configuration requirement, a User Equipment (UE) capability negotiation request to a master serving base station, where the UE capability negotiation request is used for negotiating about a UE capability; and the secondary serving base station receives a UE capability negotiation reply fed back by the master serving base station in response to the UE capability negotiation request. Further provided is a storage medium.

Patent Document WO2020/041966 A1 describes techniques to facilitate synchronization of a security configuration switch, where the base station and/or mobile device determine activation sequence numbers for the security configuration switch (e.g., by estimating when a path switch will occur), or where the security configuration switch is implicitly detected based in deciphering failure, or where the security configuration switch is explicitly signaled and is checked based on deciphering failure, or where, using make before break handover techniques, a source base station may be retained after the path switch.

### [Prior art documents]

### [Non-patent documents and patent documents]

[Non-Patent Document 1] 3GPP TS 38. 331 V15. 9. 0 (2020-03)
[Non-Patent Document 2] 3GPP TS 36. 331 V15. 9. 0 (2020-03)
[Non-Patent Document 3] 3GPP TS 37. 340 V15. 8. 0 (2019-12)
[Non-Patent Document 4] Huawei, Huawei Device: "Summary of email discussion [107bis#47] [NR TEI16] Overheating reporting in (NG) EN-DC", 3GPP Draft; R2-1915259, 3rd Generation Partnership Project (3GPP), 13 November 2019
[Patent Document 1] EP 3 606 228 A1
[Patent Document 2] WO 2020/041966 A1

### [Summary of Invention]

### [Problem to be solved by the invention]

However, in the prior art described in Non-Patent Documents 1 and 2, in the EN-DC, there is a problem that the number of SCells to be deleted in a gNB is unknown because there is no means of notifying the number of SCells to be deleted from the eNB to the gNB.

Note that, the above problem may arise not only for EN-DC but also for DC as a whole. The above problem may also arise with respect to a configuration amount (e.g., bandwidth) that is not limited to the number of SCells.

The present invention has been made in view of the foregoing, and is intended to provide, in a wireless communication system, a technique that enables a secondary node in dual connectivity to know a configuration amount to be reduced.

### [Means for Solving Problems]

The invention is set out in the appended set of claims.

### [Effects of the Invention]

According to the disclosed technique, it becomes possible that a secondary node in dual connectivity knows the configuration amount to be reduced in a wireless communication system.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a sequence diagram of Example 1;
Fig. 4 is a flowchart of Example 1;
Fig. 5 is a diagram showing an example of specification modification;
Fig. 6 is a diagram showing an example of specification modification;
Fig. 7 is a sequence diagram of Example 2;
Fig. 8 is a diagram showing an example of specification modification;
Fig. 9 is a diagram showing an example of specification modification;
Fig. 10 is a diagram showing an example of specification modification;
Fig. 11 is a diagram showing an example of specification modification;
Fig. 12 is a diagram showing an example of specification modification;
Fig. 13 is a diagram showing an example of specification modification;
Fig. 14 is a diagram showing an example of specification modification;
Fig. 15 is a sequence diagram of Example 3;
Fig. 16 is a diagram showing an example of specification modification;
Fig. 17 is a diagram showing an example of specification modification;
Fig. 18 is a diagram showing an example of specification modification;
Fig. 19 is a diagram showing an example of specification modification;
Fig. 20 shows an example of a functional configuration of a base station apparatus 10 according to an embodiment of the present invention;
Fig. 21 shows an example of a functional configuration of a user terminal 20 according to an embodiment of the present invention;
Fig. 22 is a diagram illustrating an example of hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technologies are those specified, for example, in existing LTEs and NRs. The wireless communication system (the base station apparatuses 10A and 10B and the user terminal 20) according to the present embodiment basically operates according to the existing specification (for example, Non-Patent Documents 1 and 2). However, in order to solve existing problems, the base station apparatuses 10A and 10B and the user terminal 20 also perform operations that are not included in the existing specifications. In the description of Examples which will be described later, operations not included in the existing provisions are mainly described.

In embodiments of the present invention, the duplex method may be a TDD (Time Division Duplex) method, a FDD (Frequency Division Duplex) method, or any other method (e.g., Flexible Duplex, etc.).

In an embodiment of the present invention, "wireless parameter or the like being configured" may mean that a predetermined value is preconfigured or that a wireless parameter notified from the base station apparatus 10 or the user terminal 20 is configured.

In this embodiment, the description mainly assumes EN-DC, but the present invention is applicable to DC in general, not limited to EN-DC. In this embodiment, the number of SCells and the bandwidth are indicated as examples of the configuration amount to be reduced for addressing terminal heating. However, the present invention is applicable to any configuration amount not limited to the number of SCells and the bandwidth.

### (System Configuration)

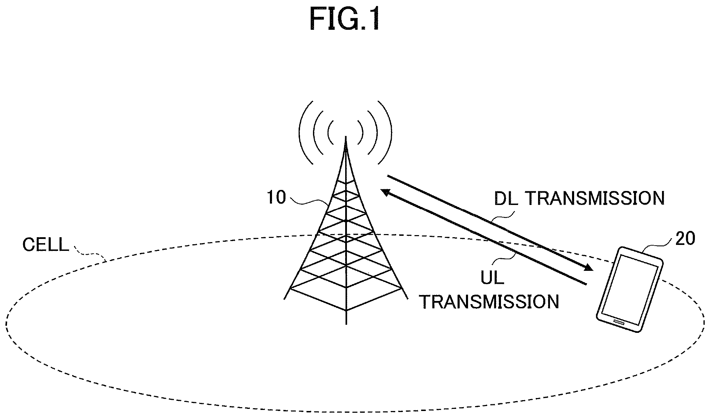

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 is shown for convenience of illustrating an outline of the base station apparatus 10 and the user terminal 20. In this embodiment, the configuration of DC (dual connectivity) which will be described later is mainly targeted.

The base station apparatus 10 is a communication apparatus that provides one or more cells and performs wireless communication with the user terminal 20. The physical resources of radio signals are defined in time and frequency domains.

OFDM is used as the wireless access method. In the frequency domain, as subcarrier spacing (SCS), for example, 15 kHz, 30 kHz, 120 kHz, 240 kHz, etc are supported. In addition, resource blocks are constructed by a predetermined number of consecutive subcarriers (e.g., 12) regardless of SCS.

Also, in the time domain, slots or subframes are configured by a plurality of OFDM symbols (for example, 14 symbols for a slot regardless of subcarrier spacing). The OFDM symbol is hereinafter referred to as a "symbol". A slot or a subframe is a scheduling unit. A frame consisting of 10 subframes is defined.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both communicate via a SCell (Secondary Cell) and a PCell (Primary Cell) by a CA (Carrier Aggregation).

The user terminal 20 is a communication device, having a wireless communication function, such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10. A user terminal may be referred to as a "terminal".

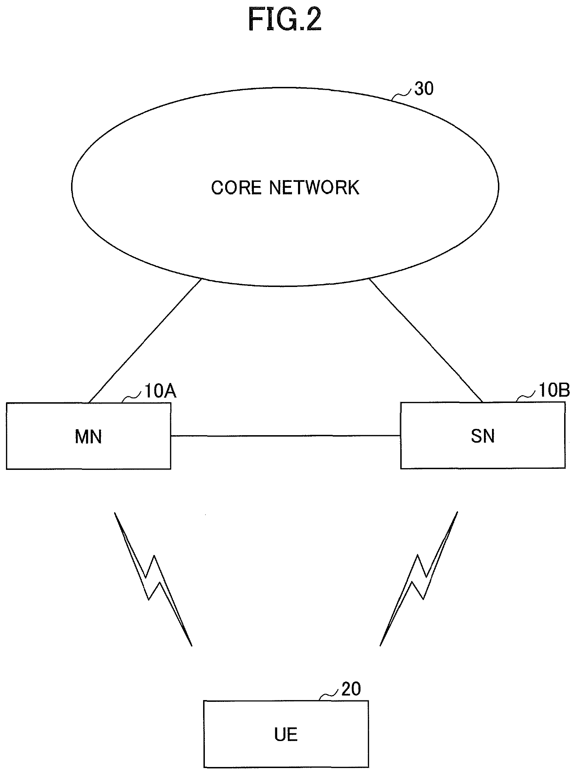

Fig. 2 shows an example of a configuration of a wireless communication system when DC (Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called MCG (Master Cell Group), and the cell group provided by the base station apparatus 10B that is an SN is called SCG (Secondary Cell Group). MCG includes only PCell or PCell and at least one SCell. SCG may include only PSCell or PSCell and one or more SCells. PSCell is one type of SCell.

The operation according to the present embodiment is performed by the configuration of DC in Fig. 2. The DC may be NE-DC, EN-DC, or NR-DC. However, in this embodiment, an example of the case of EN-DC is described as an example.

In the configuration shown in Fig. 2 as EN-DC, the base station apparatus 10A as the MN is called eNB, and the base station apparatus 10B as the SN is called gNB. In this embodiment, SCell and CC (component carrier) are used as synonyms. In the following description, the base station apparatus 10A is referred to as a MN 10A and the base station apparatus 10B is referred to as a SN 10B. The user terminal 20 is called a UE 20.

### (Problems)

As described above, overheating assistance information for LTE is defined in Rel-14, which reports peak rate (UE category) and a recommended value of SCells in Carrier Aggregation from the UE 20, in order to suppress overheating when the UE 20 overheats.

In addition, in Rel-15, the function has been extended so that overheating assistance information can be applied to EN-DC. Specifically, in the case of EN-DC, an extension is made so that reportable reducedCCsDL and reducedCCsUL contain both LTE and NR (P)SCell. The exerpt from Non-Patent Document 2 containing the description of the extension is as follows.

### reducedCCsDL

Indicates the UE's preference on reduced configuration corresponding to the maximum number of downlink SCells indicated by the field, to address overheating. This maximum number includes both SCells of E-UTRA and PSCell/SCells of NR in (NG)EN-DC.

### reducedCCsUL

Indicates the UE's preference on reduced configuration corresponding to the maximum number of uplink SCells indicated by the field, to address overheating. This maximum number includes both SCells of E-UTRA and PSCell/SCells of NR in (NG)EN-DC.

The MN 10A can obtain the number of SCells of UL and DL desired by the user terminal 20 from reducedCCsDL and reducedCCsUL by receiving overhead assistance information including the above information from the UE 20 in which EN-DC is configured.

When EN-DC is stopped (when SCG is deleted), the MN 10A can reduce the number of SCells to the number reported by the user terminal 20, since it is only necessary to consider LTE CA.

On the other hand, since the existing provisions do not have means to notify the number of SCells to be reduced from the MN 10A to the SN 10B, when trying to reduce the number of SCells to a number of SCells, desired by the user terminal 20, by deleting SCells of LTE and SCells of NR while EN-DC is configured, the SN10B does not know how many SCells to reduce.

As an example, in a state in which the UE 20 performing EN-DC is configured with five SCells of LTE and NR in total, when the MN10A is requested by the UE 20 to reduce the SCells to two SCells, it is necessary to delete three SCells of LTE and NR. For example, if MN10A deletes one SCell of LTE, the SN 10B needs to delete two SCells of NR, but the prior art cannot communicate it from the MN 10A to the SN 10B.

Hereinafter, examples of specific techniques for solving the above-described problems will be described in Examples 1 to 3. In any of Examples 1-3, processing for DL SCell and processing for UL SCell may be performed in separate sequences, or processing for DL SCell and processing for UL SCell may be performed simultaneously. Further, in any of Examples 1-3, the sequence includes a SCell reduction process, but the sequence for actual SCell reduction is not shown. Specific SCell reduction processes can be performed using, for example, the existing technology described in Non-Patent Document 3. Further, in any of Examples 1 to 3, SCell reduction processing in the sequence does not need to be performed at a timing shown in the sequence, but may be performed at a timing other than the timing shown in the sequence.

### (Example 1)

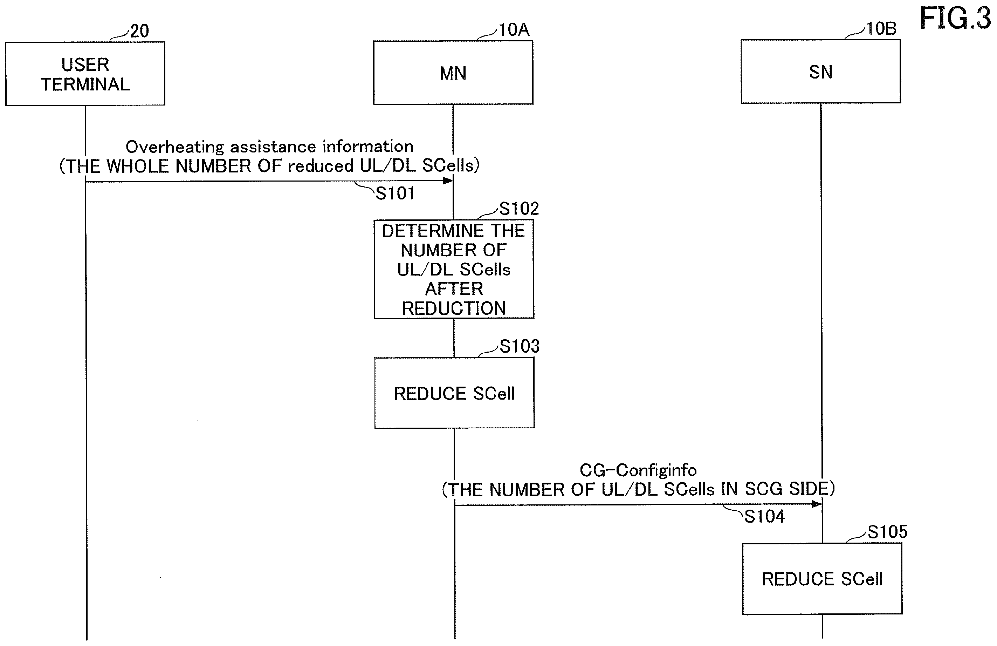

First, Example 1 will be described. Fig. 3 shows an example sequence in Example 1. In S101, the user terminal 20 transmits overheating assistance information defined in LTE RRC (Non-Patent Document 2) to the MN 10A. The overheating assistance information includes, as reducedCCsDL/reducedCCsUL, the maximum value of sum of the number of LTE SCell (s) (MCG side) and the number of NR PSCell/SCell(s) (SCG side) for each of UL and DL, after SCell reduction desired by the user terminal 20 for coping with overheat.

In S102, the MN 10A determines, for each of UL and DL, the number of SCells after reduction of the MN 10A side (i.e., the MCG side) based on the number of SCells received at S101 (the maximum number of SCells after reduction). If SCells (PSCl/SCell) need to be deleted also in the SCG side, the MN 10A also determines, for each of UL and DL, the number of SCells after reduction on the SN 10B side (i.e., SCG side).

In S103, the MN 10A reduces SCells to the reduced number of SCells on the MN 10A side.

When the number of SCells after reduction on the SN 10B side (i.e., the SCG side) is determined, in S104, the MN 10A notifies the SN 10B of a message (CG-ConfigInfo) containing the number of SCells after reduction on the SCG side for each of UL and DL.

In S105, the SN 10B that has received the CG-ConfigInfo reduces Scell(s) so that the number of SCells of the SCG side becomes equal to the notified number of SCells, for each of UL and DL.

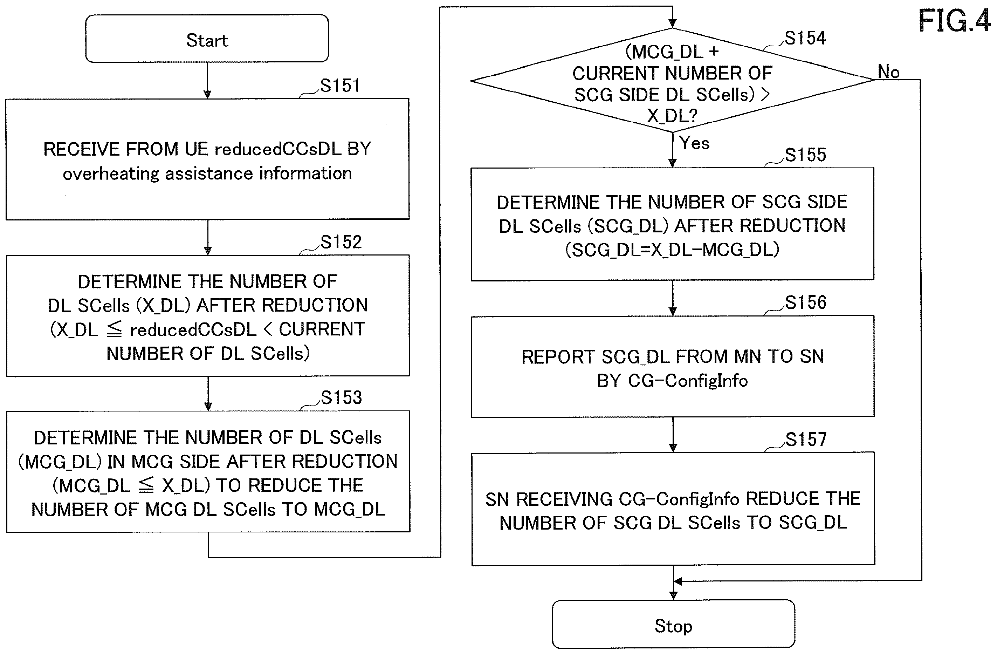

Referring to the flowchart shown in Fig. 4, a determination process of the number of SCells after reduction and the like will be described in more detail. Fig. 4 is a flowchart that focuses on DL. The same flow is applied to UL as shown in Fig. 4.

In S151, the MN 10A receives reducedCCsDL from the UE 20 by overheating assistance information. The reducedCCsDL includes the total number of DL SCells after reduction.

In S152, the MN 10A determines the total number of DL SCells (X_DL) after reduction (sum of MCG and SCG sides), in which "X_DL ≦ reducedCCsDL < current total number of DL SCells" is satisfied. That is, X_DL may be smaller than reducedCCsDL.

In S153, the MN 10A determines the number of DL Scells (MCG_DL) on the MCG side after reduction, in which "MCG_DL ≦ X_DL" is satisfied. The MN 10A deletes SCells so that the number of DL SCells on the MCG side becomes MCG _DL.

In S154, the MN 10A determines whether " (MCG_DL + current number of SCG side DL SCell) > X_DL" is satisfied. In other words, the MN 10A determines whether the sum of the number of DL SCells on the MCG side after reduction and the number of current SCG side DL SCells is greater than the total number of DL Scells (X_DL) after reduction. When the decision of S154 is No, the DL SCell on the SCG side need not be deleted. Therefore, the processing is terminated. If the determination of S154 is Yes, the process proceeds to S155.

In S155, the MN 10A determines the number of DL Scells (SCG_DL) on the SCG side after reduction by SCG_DL = X_DL-MCG_DL. In S156, the MN10A notifies the SN 10B of the SCG_DL with CG-ConfigInfo.

In S157, the SN 10B that receives the CG-ConfigInfo reduces the number of DL Scells on the SCG side to SCG_DL. For example, if the current number of DL SCells is 3 and SCG_DL is 1, the SN 10B deletes two SCells.

The above example is an example of reduction in the number of SCells for each of UL and DL, but the above process can also be applied to reduction in a total bandwidth (aggregated bandwidth) of UL and DL. In the case of the total bandwidth, the above number of SCells may be replaced by the total bandwidth. In addition to processing to reduce the number of SCells, processing to reduce the total bandwidth may be performed.

The UL total bandwidth is the sum of bandwidths of active UL BWPs in all UL carriers. The DL total bandwidth is the sum of bandwidths of active DL BWPs in all DL carriers.

A process for the total bandwidth will be described in accordance with the flow of Fig. 4. DL is described below, but the same applies to UL.

In S151, the MN 10A receives a maximum value of the total bandwidth for entire MCG and SCG after reduction from the UE 20 by overheating assistance information.

In S152, the MN 10A determines the total bandwidth (X_DL) of DL of the whole (total of MCG side and SCG side) after reduction, in which "X_DL ≦ reduced DL total bandwidth < Current total DL bandwidth" is satisfied.

In S153, the MN 10A determines the DL total bandwidth (MCG_DL) of the MCG side after reduction, in which "MCG_DL ≦ X_DL" is satisfied. The MN 10A deletes the bandwidth so that the DL total bandwidth of MCG side becomes MCG_DL.

In S154, the MN 10A determines whether " (MCG_DL + current SCG side total DL bandwidth) > X_DL" is satisfied. That is, the MN 10A determines whether the sum of the reduced MCG DL total bandwidth and the current SCG DL total bandwidth is greater than the reduced total DL bandwidth (X_DL). When the determination of S154 is No, the DL total bandwidth on the SCG side need not be deleted. Therefore, the processing is terminated. If the determination of S154 is Yes, the process proceeds to S155.

In S155, the MN 10A determines the DL total bandwidth (SCG_DL) on the SCG side after reduction by SCG_DL=X_DL-MCG_DL. In S156, the MN 10A notifies the SN 10B of SCG_DL by CG-ConfigInfo.

In S157, the SN 10B that receives the CG-ConfigInfo reduces the DL total bandwidth on the SCG side to SCG_DL. For example, if the current total DL bandwidth is 100 M and SCG_DL is 50 M, the SN 10B deletes a bandwidth of 50 M.

Hereinafter, a specification modification example of SCell reduction will be described. With regard to the modification example of the specification, in Examples 1-3, the UE 20, the MN 10A, and the SN 10B perform operation based on the changed specification.

### <Example 1: Example of Specification Change>

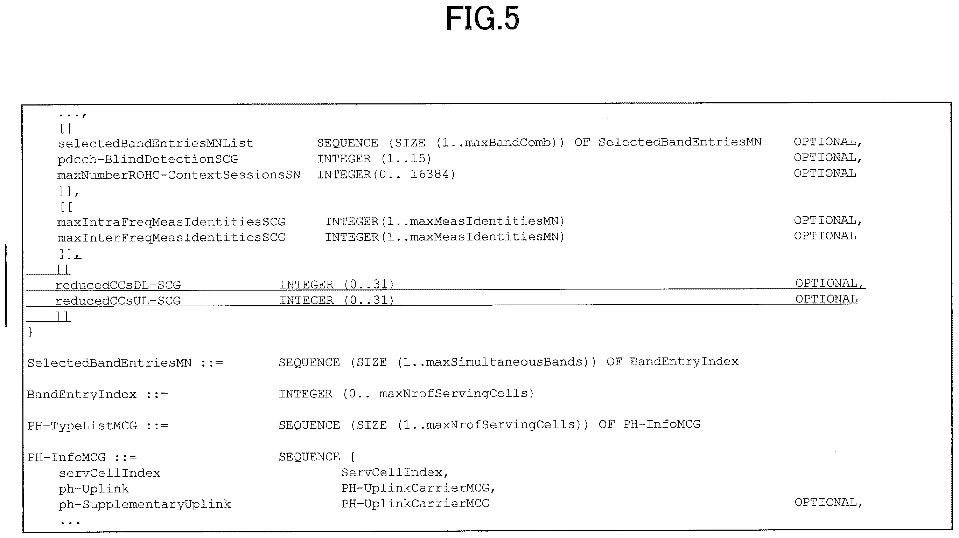

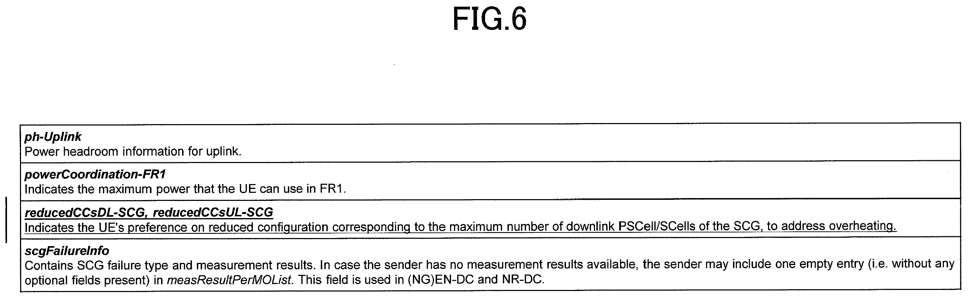

Fig. 5 shows a modification example of CG-ConfigInfo message (excerpt) in Non-Patent Document 1 (TS38.331). Fig. 6 is a modification example of CG-ConfigInfo field descriptions (excerpts) in which descriptions of reducedCCsDL-SCG, and reducedCCsUL-SCG added in Fig. 5 are added.

### (Example 2)

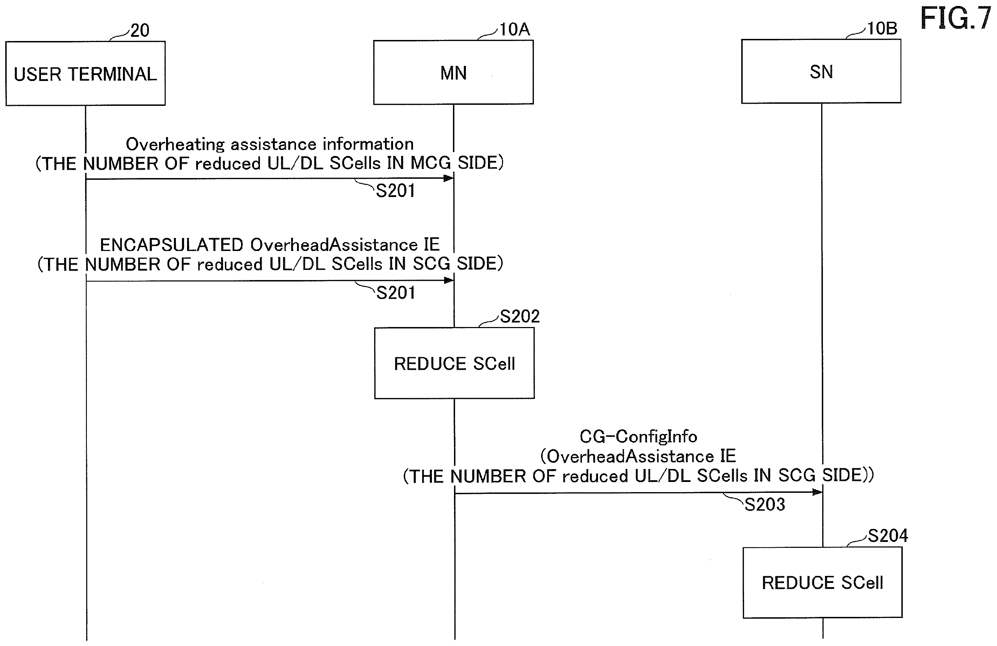

Next, Example 2 will be described. Fig. 7 shows an example of a sequence in Example 2. In S201, for each of UL and DL, the UE 20 reports, to the MN 10A, the number of SCells after reduction on the MCG (LTE) side and the number of SCells after reduction on the SCG (NR) side independently (separately).

More specifically, for each of UL and DL, the UE 20 reports the number of SCells after reduction on the MCG side to the MN 10A by reducedCCsDL/reducedCCsUL of overheating assignment information defined in Non-Patent Document 2 (TS36.331).

In the overheating assignment information, the reducedCCsDL includes the maximum value of the number of DL SCells after reduction on the MCG side, and the reducedCCsUL includes the maximum value of the number of UL SCells after reduction on the MCG side.

For each of UL and DL, the UE 20 reports the number of SCells after reduction on the SCG side to the MN 10A by reducedCCsDL/reducedCCsUL IE of OverheatingAssistance IE defined in Non-Patent Document 1 (TS38.331). In this case, the UE 20 encapsulates the OverheatingAssistance IE defined in Non-Patent Document 1 (TS38.331) in UEAssistanceInformation message of Non-Patent Document 2 (TS36.331) and reports it to the MN 10A.

Accordingly, in S201 of Fig. 7, the UE 20 transmits to the MN 10A the UEAssistanceInformation message that includes the above-described overheating assistance information and OverheatingAssistance IE.

In the OverheatingAssistance IE, the reducedCCsDL includes the maximum value of the number of DL Scells after reduction on the SCG side, and the reducedCCsUL includes the maximum value of the number of UL SCells after reduction on the SCG side.

In S202, the MN 10A obtains the number of SCells after reduction from the overheating assistance information for each of DL and UL, and reduces the number of SCells to less than or equal to the obtained number of SCells.

In S203, the MN 10A retrieves the OverheatingAssistance IE encapsulated in the UEAssistanceInformation message and forwards the OverheatingAssistance IE to the SN 10B with CG-ConfigInfo.

The SN 10B that receives the CG-ConfigInfo decodes the OverheatingAssistance IE in S204 and reduces the number of SClls in the SCG for each of DL and UL based on the reducedCCsDL/reducedCCsUL in the IE.

The above example is an example of reduction in the number of SCells for each of UL and DL, but the above procedure is also applied to reduction of total bandwidth (aggregated bandwidth) for UL and DL. In the case of the total bandwidth, the above number of SCells may be replaced by the total bandwidth. In addition to the processing to reduce the number of SCells, processing to reduce the total bandwidth may be performed.

A process for the total bandwidth will be described in accordance with the flow of Fig. 7. In S201, for each of UL and DL, the UE 20 reports, to the MN 10A, the maximum value of the total bandwidth after reduction on the MCG (LTE) side and the maximum value of the total bandwidth after reduction on the SCG (NR) side independently (separately).

More specifically, for each of UL and DL, the UE 20 reports the total bandwidth after reduction on the MCG side to the MN 10A, for example, by overheating assistance information.

For each of UL and DL, respectively, the UE 20 reports the total bandwidth after reduction of the SCG side to the MN 10A, for example, by OverheatingAssistance IE defined in Non-Patent Document 1 (TS38.331). In this case, the UE 20 encapsulates the OverheatingAssistance IE defined in Non-Patent Document 1 (TS38.331) in the UEAssistanceInformation message of Non-Patent Document 2 (TS36.331) and reports it to the MN 10A.

In S202, the MN 10A obtains the total bandwidth after reduction from the overheating assistance information for each of DL and UL, and reduces the total bandwidth to less than or equal to the obtained total bandwidth.

In S203, the MN 10A retrieves the OverheatingAssistance IE encapsulated in the UEAssistanceInformation message and forwards the OverheatingAssistance IE to the SN 10B with the CG-ConfigInfo.

The SN 10B that receives the CG-ConfigInfo obtains the total bandwidth of the SCG side for each of DL and UL from the OverheatigAssistance IE in S204 and reduces the total bandwidth within the SCG based on the obtained total bandwidth.

### <Example 2: Examples of Specification Changes>

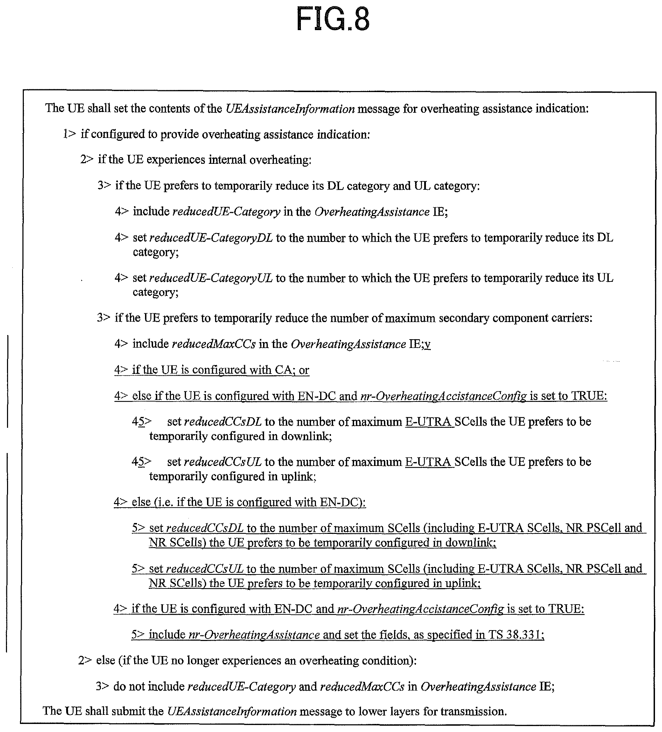

A specification modification example of reduction of the number of SCells according to Example 2 will be described. Fig. 8 shows an example of modification in "5.6.10.3 Actions related to transmission of UEAssistanceInformation message" (excerpt) in Non-Patent Document 2 (TS36.331). As shown in Fig. 8, when EN-DC and nr-OverheatingAccistanceConfig (true) is set to UE 20, the UE 20 sets the number of DL SCells after reduction on MCG side to reducedCCsDL and the number of UL SCells after reduction on MCG side to reducedCCsUL. In addition, nr-OverheatingAccistance (including NR OverheatingAssistance IE) is included in the UEAssistanceInformation message.

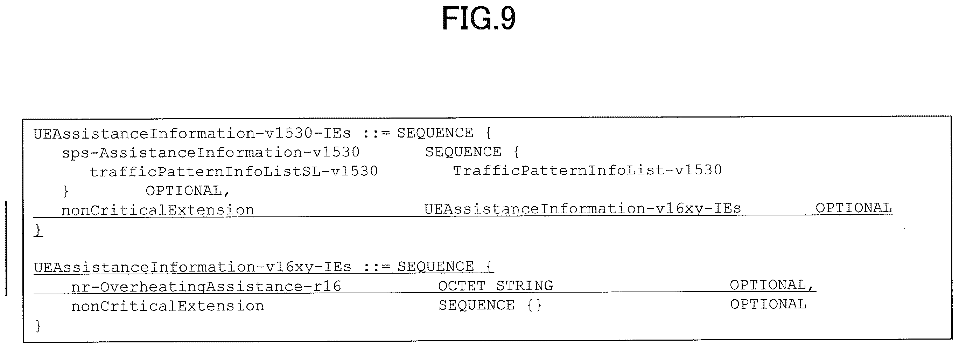

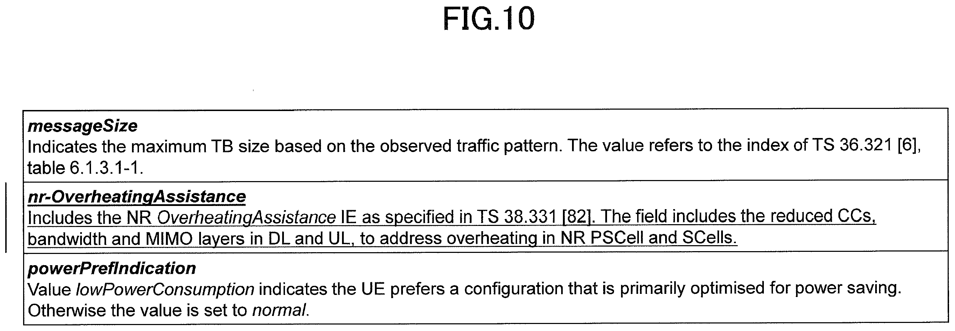

Fig. 9 shows a modification example in the UEAssstanceInformation message (excerpt) in Non-Patent Document 2 (TS36.331). Fig. 10 shows a modification example in UEAssstanceInformation field descriptions (excerpts) in Non-Patent Document 2 (TS36.331).

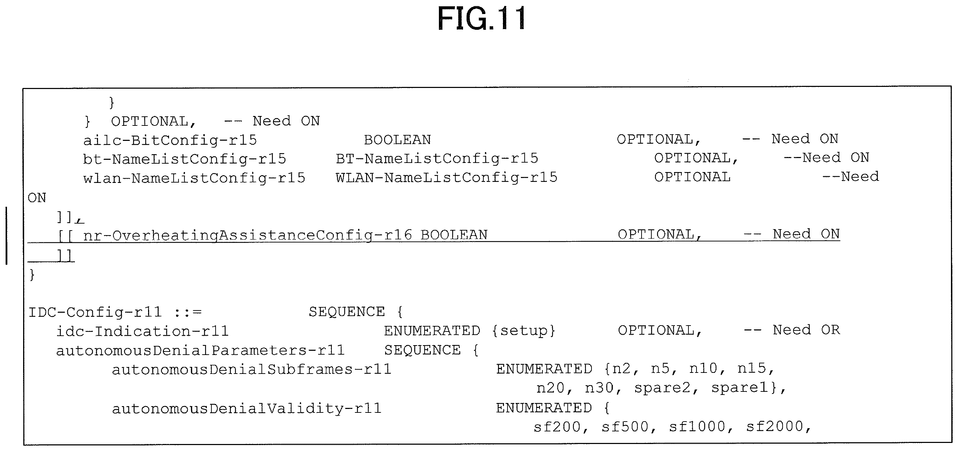

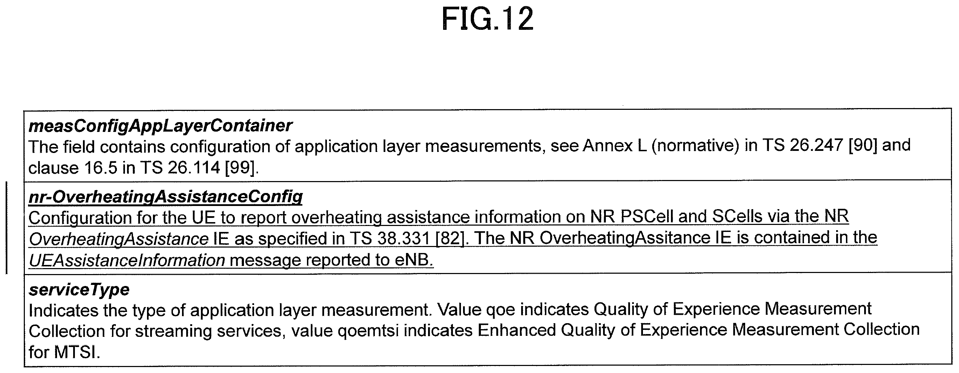

Fig. 11 shows a modification example in OtherConfig information element (excerpt) in Non-Patent Document 2 (TS36.331). Fig. 12 shows a modification example in OtherConfig field descriptions (excerpts) in Non-Patent Document 2 (TS36.331).

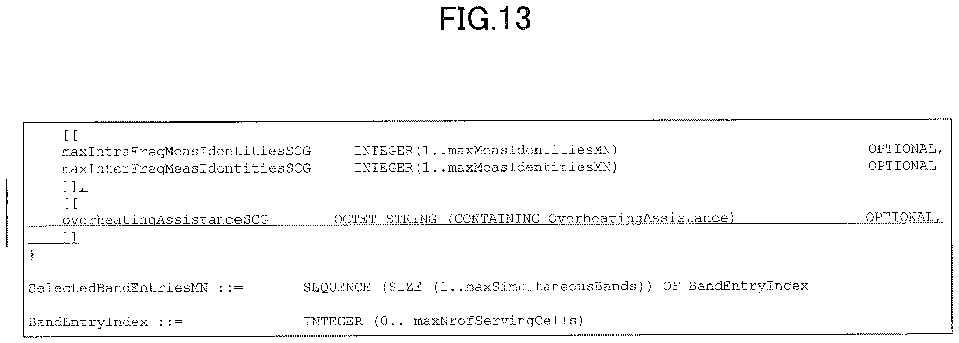

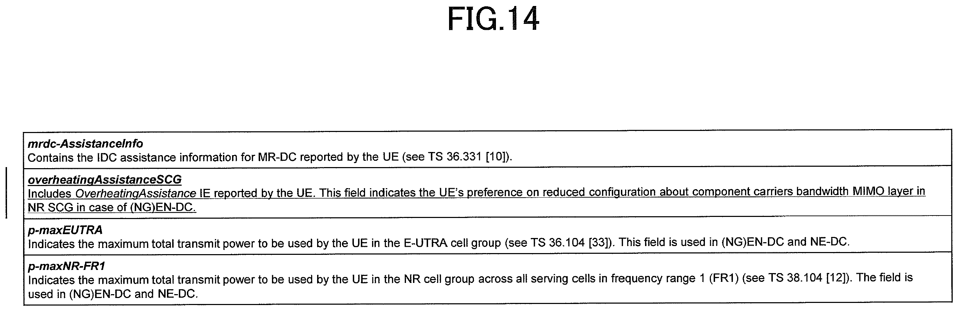

Fig. 13 shows a modification example in the CG-ConfigInfo message (excerpt) in Non-Patent Document 1 (TS38.331). Fig. 14 shows a modification example in CG-ConfigInfo field descriptions (excerpts) in Non-Patent Document 1 (TS38.331).

### (Example 3)

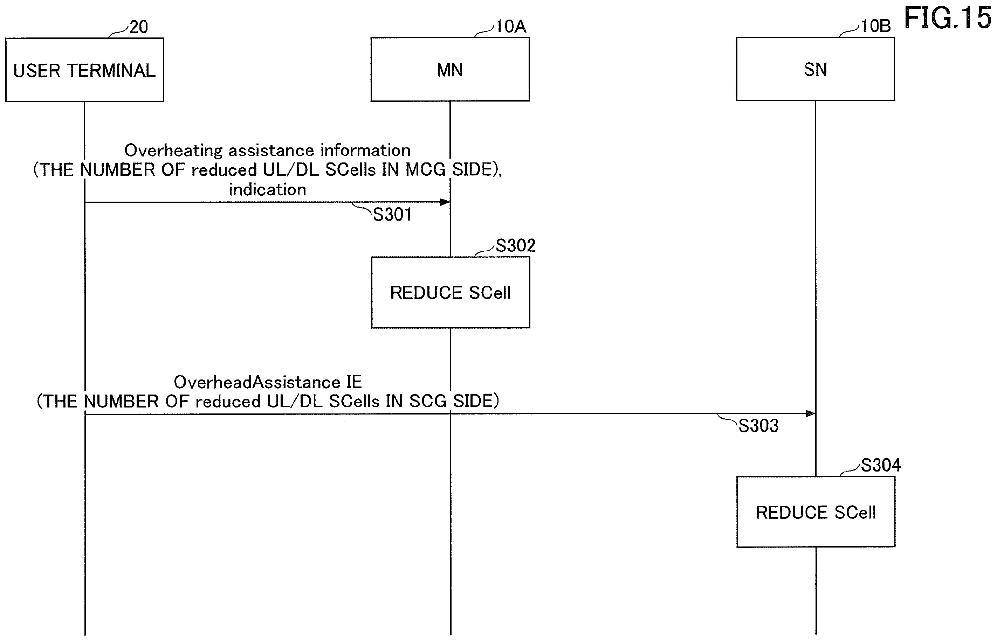

Next, Example 3 will be described. Fig. 15 shows an example sequence in Example 3. In S301, for each of UL and DL, the UE 20 reports the number of SCells after reduction on the MCG (LTE) side to the MN 10A.

More specifically, for each of UL and DL, the UE 20 reports the number of SCells after reduction on the MCG side to the MN 10A by reducedCCsDL/reducedCCsUL of the overheating assistance information defined in Non-Patent Document 2 (TS36.331).

In the overheating assistance information, the reducedCCsDL includes the maximum value of the number of DL SCells after reduction on the MCG side, and the reducedCCsUL includes the maximum value of the number of UL SCells after reduction on the MCG side. Overheating assistance information is included in the UEAssistanceInformation message.

As will be described later, the number of SCells on the SCG side is sent directly from the UE 20 to the SN 10B by SRB3. Therefore, UEAssistanceInformation on the MCG (LTE) side includes an indication indicating that information on SCG (NR) side is sent by SRB3. This enables the MN 10A to understand that reducedCCsDL/reducedCCsUL on the MCG side indicates only the number of SCells on the MCG side.

That is, in the existing specification, in the case of EN-DC, reducedCCsDL/reducedCCsUL also includes PSell and SCell(s) of NR SCG. Therefore, by notifying this indication, it is clearly indicated that the operation is different from that of the existing specification.

In S302, the MN 10A acquires the number of SCells after reduction from the overheating assistance information for each of DL and UL, and reduces the number of SCells to less than or equal to the acquired number of SCells.

In S303, for each of UL and DL, the UE 20 reports the number of SCells after reduction of the SCG side to the SN 10B by reducedCCsDL/reducedCCsUL of OverheatingAssistance IE defined in Non-Patent Document 1 (TS38.331).

More specifically, the UE 20 transmits the UEAssistanceInformation message including the OverheatingAssistance IE defined in Non-Patent Document 2 (TS38.331) directly to the SN 10B by SRB3. In the OverheatingAssistance IE, the reducedCCsDL includes the maximum value of the number of DL Scells after reduction on the SCG side, and the reducedCCsUL includes the maximum value of the number of UL SCells after reduction on the SCG side.

The SN 10B that receives the OverheatingAssistance IE decodes the OverheatingAssitance IE in S304 and reduces the number of SCells in the SCG for each of DL and UL based on the reducedCCsDL/reducedCCsUL in the IE.

The above example is an example of reduction in the number of SCells for UL and DL, but the above procedure is also applied to reduction in the total bandwidth (aggregated bandwidth) of UL and DL. In the case of the total bandwidth, the above number of SCells may be replaced by the total bandwidth. In addition to processing to reduce the number of SCells, processing to reduce the total bandwidth may be performed.

A process for the total bandwidth will be described in accordance with the flow of Fig. 15. In S301, for each of UL and DL, the UE 20 reports, for example, the total bandwidth after reduction on the MCG (LTE) side to the MN 10A by overheating assistance information.

In S302, the MN 10A obtains the total bandwidth after reduction on the MCG side from the overheating assistance information for each of DL and UL, and reduces the total bandwidth to equal to or less than the obtained total bandwidth.

In S303, the UE 20 reports the total bandwidth after reduction of the SCG side for each of UL and DL, to the SN 10B by SRB3, for example, by the OverheatingAssistance IE defined in Non-Patent Document 1 (TS38.331).

The SN 10B receiving the OverheatingAssistance IE decodes the OverheatingAssistance IE at S304 and reduces the total bandwidth within the SCG for each of DL and UL based on the reduced total bandwidth after reduction of the SCG side within the IE.

### <Example 3: Examples of Specification Changes>

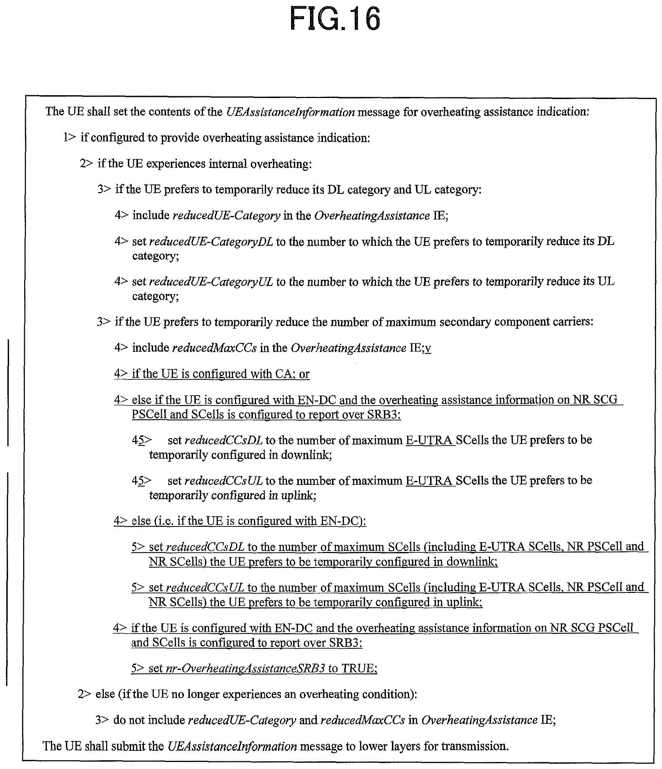

A specification modification example on reduction of the number of SCells according to Example 3 will be described. Fig. 16 shows an example of modification of "5.6.10.3 Actions related to transmission of UEAssistanceInformation message " (excerpt) in Non-Patent Document 2 (TS36.331). As shown in Fig. 16, when EN-DC is configured and transmitting SCG side overheating assistance information by SRB3 is configured in the UE 20, the UE 20 sets the number of DL SCells after reduction of MCG side to reducedCCsDL and sets the number of the UL SCells after reduction of MCG side to reducedCCsUL. Also, the UE 20 sets the nr-OverheatingAssistanceSRB3, which corresponds to the indication described above, to TRUE.

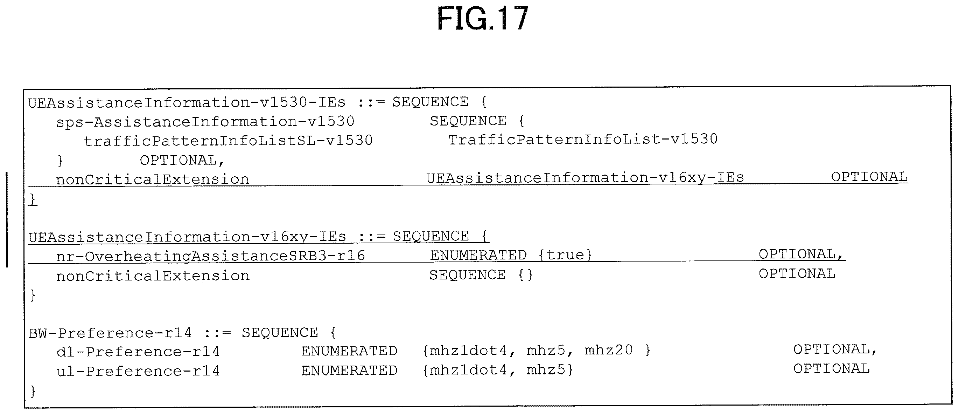

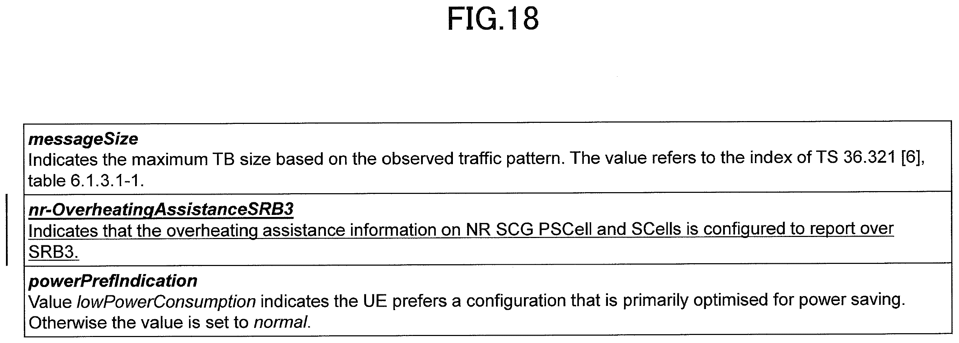

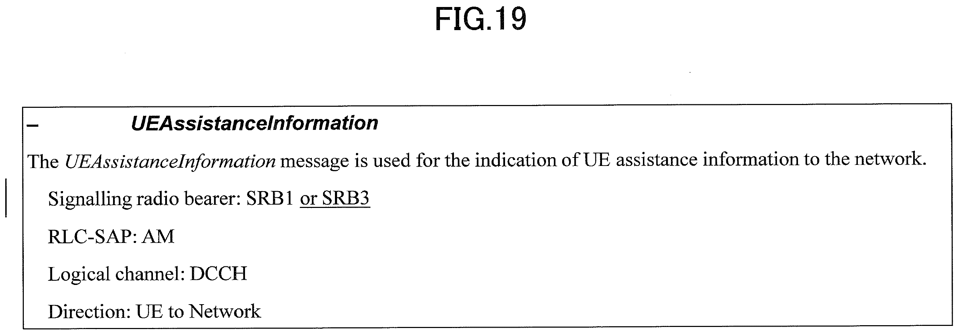

Fig. 17 shows an example of modification of the UEAssistanceInformation message (excerpt) in Non-Patent Document 2 (TS36.331). Fig. 18 shows an example of modification in the UEAssistanceInformation field descriptions (excerpts) in Non-Patent Document 2 (TS36.331). Fig. 19 shows an example of modification in UEAssistanceInformation (excerpt) in Non-Patent Document 1 (TS38.331).

By any of the above-described Examples 1 to 3, in a wireless communication system, it becomes possible that a secondary node in dual connectivity can know a configuration amount to be reduced.

### (Equipment configuration)

Next, a functional configuration example of the base station apparatus 10 and the user terminal 20 that perform the processing and operations described above will be described.

### <Base Station apparatus 10>

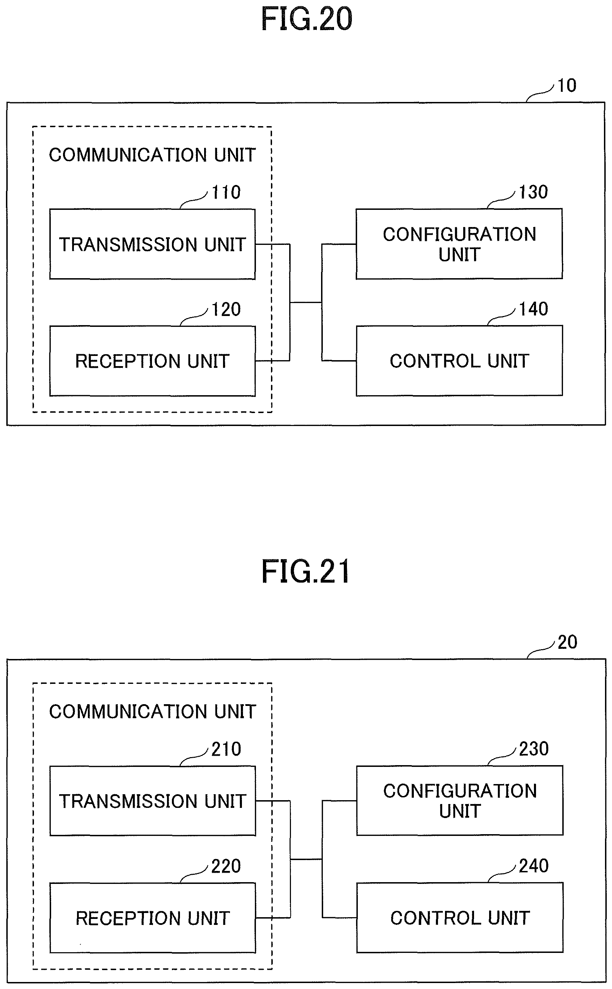

Fig. 20 is a diagram illustrating an example of a functional configuration of the base station apparatus 10. The base station apparatus 10 may be used as the MN 10A or as the SN 10B. As shown in Fig. 20, the base station apparatus 10 includes a transmission unit 110, a reception unit 120, a configuration unit 130, and a control unit 140. The functional configuration shown in FIG. 20 is only one example. As long as the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The receiving unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The transmission unit 110 includes a function for transmitting signals (messages) to other base station apparatuses, and the reception unit 120 includes a function for receiving signals (messages) from other base station apparatuses.

The configuration unit 130 stores preconfigured configuration information and various configuration information to be transmitted to the user terminal 20 in the storage device provided by the configuration unit 130 and reads the preconfigured configuration information from the storage device as necessary.

The control unit 140 schedules DL reception or UL transmission of the user terminal 20 through the transmission unit 110. The control unit 140 also includes a function to determine a reduced configuration amount in the MCG and a reduced configuration amount in the SCG. Further, the control unit 140 may perform processing such as reducing SCells, reducing bandwidth, etc. to a predetermined reduced configuration amount. A function unit related to signal transmission in the control unit 140 may be included in the transmission unit 110, and a function unit related to signal reception in the control unit 140 may be included in the reception unit 120. The transmission unit 110 may be called a transmitter, and the reception unit 120 may be called a receiver.

### <User terminal 20>

Fig. 21 is a diagram illustrating an example of the functional configuration of the user terminal 20. As shown in Fig. 21, the user terminal 20 includes a transmission unit 210, a reception unit 220, a configuration unit 230, and a control unit 240. The functional configuration shown in FIG. 21 is only one example. If the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The receiving unit 220 receives various signals wirelessly and acquires signals from higher layers from the received signal of the physical layer. The reception unit 220 has a function to receive NR-PSS, NR-SSS, NR-PBCH, and DL/UL/SL control signals transmitted from the base station apparatus 10, DCI by PDCCH, data by PDSCH, and the like. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the receiving unit 120 may receive PSCCH, PSSCCH, PSDCH, PSDCH, or PSBCH, etc. from another user terminal 20. Further, the reception unit 220 can perform reception beam sweeping.

The configuration unit 230 stores various configuration information received from the base station apparatus 10 or other user terminals by the receiving unit 220 in a storage device provided by the configuration unit 230 and reads it from the storage device as necessary. The configuration unit 230 also stores preconfigured configuration information.

The control unit 240 performs control of the user terminal 20. A functional unit related to signal transmission in the control unit 240 may be included in the transmission unit 210, and a functional unit related to signal reception in the control unit 240 may be included in the reception unit 220. The transmission unit 210 may be referred to as a transmitter, and the reception unit 220 may be referred to as a receiver.

### [Summary]

According to the present embodiment, at least the base station apparatuses and terminals shown in the following items 1 to 6 are provided.

### (Item 1)

A base station apparatus functioning as a first base station apparatus in a communication system including the first base station apparatus and a second base station apparatus that perform communication with a terminal by dual connectivity, comprising:
a reception unit configured to receive, from the terminal, a total configuration amount that is a configuration amount reduced for addressing terminal overheating and that is a configuration amount for both of the first base station apparatus and the second base station apparatus;
a control unit configured, based on the total configuration amount, to determine a configuration amount for the first base station apparatus and a configuration amount for the second base station apparatus; and
a transmission unit configured to transmit the configuration amount for the second base station apparatus to the second base station apparatus.

### (Item 2)

A base station apparatus functioning as a first base station apparatus in a communication system including the first base station apparatus and a second base station apparatus that perform communication with a terminal by dual connectivity, comprising:
a reception unit configured, from the terminal, to separately receive a first configuration amount that is a configuration amount reduced for addressing terminal overheating and that is a configuration amount for the first base station apparatus, and a second configuration amount that is a configuration amount reduced for addressing terminal overheating and that is a configuration amount for the second base station apparatus; and
a transmission unit configured to transmit the second configuration amount to the second base station apparatus.

### (Item 3)

The base station apparatus as described in item 1 or 2, wherein the configuration amount is the number of SCells or a bandwidth.

### (Item 4)

A terminal performing communication with a first base station apparatus and a second base station apparatus by dual connectivity, comprising:
a transmission unit configured to separately transmit, to the first base station apparatus, a first configuration amount that is a configuration amount reduced for addressing terminal overheating and that is a configuration amount for the first base station apparatus, and a second configuration amount that is a configuration amount reduced for addressing terminal overheating and that is a configuration amount for the second base station apparatus;
wherein the second configuration amount is transmitted from the first base station apparatus to the second base station apparatus.

### (Item 5)

A terminal performing communication with a first base station apparatus and a second base station apparatus by dual connectivity, comprising:
a transmission unit configured to transmit, to the first base station apparatus, a first configuration amount that is a configuration amount reduced for addressing terminal overheating and that is a configuration amount for the first base station apparatus, and to transmit, to the second base station apparatus, a second configuration amount that is a configuration amount reduced for addressing terminal overheating and that is a configuration amount for the second base station apparatus.

### (Item 6)

The terminal as claimed in item 4 or 5, wherein the configuration amount is the number of SCells or a bandwidth.

According to any of items 1-6, there is provided a technique that enables a secondary node in dual connectivity to know a configuration amount to be reduced in a wireless communication system.

### (Hardware configuration)

The block diagrams (Fig. 20 and Fig. 21) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

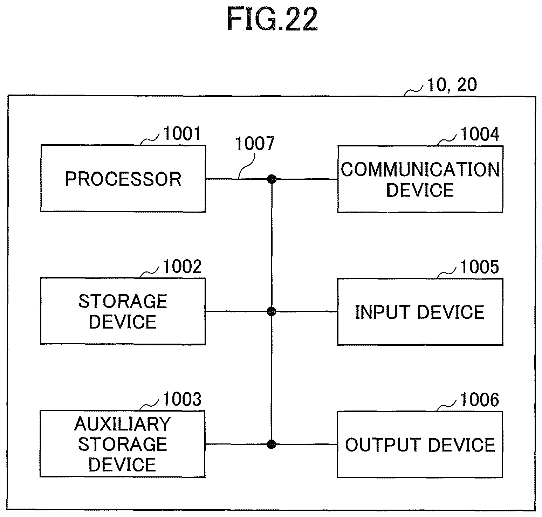

For example, the base station apparatus 10, the user terminal 20, and the like in one embodiment of this disclosure may function as a computer for performing the processing of a radio communication method of this disclosure. Fig. 22 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processings. A program for allowing a computer to execute at least a part of the operation described in the embodiment described above is used as the program. For example, the control unit 140 of the base station apparatus 10 illustrated in Fig. 20 may be attained by a control program that is stored in the storage unit 1002 and is operated by the processor 1001. In addition, for example, the control unit 240 of the user terminal 20 illustrated in Fig. 21 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like). The output unit 1006 is an output device for implementing output with respect to the outside (for example, a display, a speaker, an LED lamp, and the like). Note that, the input unit 1005 and the output unit 1006 may be integrally configured (for example, a touch panel) .

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto). In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value) .

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "up", "down", and the like may be replaced with words corresponding to the communication between the terminals (for example, "side"). For example, an uplink channel, a downlink channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP) . In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION APPARATUS
- 110: TRANSMISSION UNIT
- 120: RECEPTION UNIT
- 130: CONFIGURATION UNIT
- 140: CONTROL UNIT
- 20: USER TERMINAL
- 210: TRANSMISSION UNIT
- 220: RECEPTION UNIT
- 230: CONFIGURATION UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A base station apparatus (10A), that is a first base station apparatus (10A), comprising:
a reception unit (120) configured to receive, from a terminal (20), a configuration amount for a second base station apparatus (10B) among the first base station apparatus (10A) and the second base station apparatus (10B) that are used for dual connectivity, wherein the reception unit (120) is configured to receive a UEAssistanceInformation message including OverheatingAssistance IE that includes the configuration amount;
and
a transmission unit (110) configured to transmit the configuration amount to the second base station apparatus (10B).

2. The base station apparatus (10A) as claimed in claim 1,
wherein the configuration amount is a number of SCells.

3. A terminal (20) comprising:
a transmission unit (210) configured to transmit, to a first base station apparatus (10A), a configuration amount for a second base station apparatus (10B) among the first base station apparatus (10A) and the second base station apparatus (10B) that are used for dual connectivity,
wherein the configuration amount is transmitted from the first base station apparatus (10A) to the second base station apparatus (10B) and wherein the transmission unit (210) is configured to transmit a UEAssistanceInformation message including OverheatingAssistance IE that includes the configuration amount.

4. The terminal (20) as claimed in claim 3,
wherein the configuration amount is a configuration number reduced for addressing terminal overheating.

5. A transmission method performed by a first base station apparatus (10A), comprising:
receiving, from a terminal (20), a configuration amount for a second base station apparatus (10B) among the first base station apparatus (10A) and the second base station apparatus (10B) that are used for dual connectivity, wherein the receiving includes receiving a UEAssistanceInformation message including OverheatingAssistance IE that includes the configuration amount; and
transmitting the configuration amount to the second base station apparatus (10B).

6. A transmission method performed by a terminal (20), comprising:
transmitting, to a first base station apparatus (10A), a configuration amount for a second base station apparatus (10B) among the first base station apparatus (10A) and the second base station apparatus (10B) that are used for dual connectivity, wherein the transmitting includes transmitting a UEAssistanceInformation message including OverheatingAssistance IE that includes the configuration amount, and
wherein the configuration amount is transmitted from the first base station apparatus (10A) to the second base station apparatus (10B).

## Patentansprüche

1. Basisstationseinrichtung (10A), die eine erste Basisstationseinrichtung (10A) ist, umfassend:
eine Empfangseinheit (120), die so konfiguriert ist, dass sie von einem Endgerät (20) eine Konfigurationsmenge für eine zweite Basisstationseinrichtung (10B) unter der ersten Basisstationseinrichtung (10A) und der zweiten Basisstationseinrichtung (10B), die für duale Konnektivität verwendet werden, empfängt, wobei die Empfangseinheit (120) so konfiguriert ist, dass sie eine UEAssistancelnformation-Nachricht empfängt, die OverheatingAssistance-IE einschließt, welches die Konfigurationsmenge einschließt;
und
eine Übertragungseinheit (110), die so konfiguriert ist, dass sie die Konfigurationsmenge an die zweite Basisstationseinrichtung (10B) überträgt.

2. Basisstationseinrichtung (10A) nach Anspruch 1,
wobei die Konfigurationsmenge eine Anzahl von SCells ist.

3. Endgerät (20), umfassend:
eine Übertragungseinheit (210), die so konfiguriert ist, dass sie an eine erste Basisstationseinrichtung (10A) eine Konfigurationsmenge für eine zweite Basisstationseinrichtung (10B) unter der ersten Basisstationseinrichtung (10A) und der zweiten Basisstationseinrichtung (10B), die für duale Konnektivität verwendet werden, überträgt,
wobei die Konfigurationsmenge von der ersten Basisstationseinrichtung (10A) an die zweite Basisstationseinrichtung (10B) übertragen wird und wobei die Übertragungseinheit (210) so konfiguriert ist, dass sie eine UEAssistancelnformation-Nachricht überträgt, die OverheatingAssistance-IE einschließt, welches die Konfigurationsmenge einschließt.

4. Endgerät (20) nach Anspruch 3,
wobei die Konfigurationsmenge eine zur Behandlung einer Überhitzung des Endgeräts verringerte Konfigurationsanzahl ist.

5. Übertragungsverfahren, das von einer ersten Basisstationseinrichtung (10A) durchgeführt wird, umfassend:
Empfangen von einem Endgerät (20) einer Konfigurationsmenge für eine zweite Basisstationseinrichtung (10B) unter der ersten Basisstationseinrichtung (10A) und der zweiten Basisstationseinrichtung (10B), die für duale Konnektivität verwendet werden, wobei das Empfangen Empfangen einer UEAssistancelnformation-Nachricht einschließt, die OverheatingAssistance-IE einschließt, welches die Konfigurationsmenge einschließt; und
Übertragen der Konfigurationsmenge an die zweite Basisstationseinrichtung (10B).

6. Übertragungsverfahren, das von einem Endgerät (20) durchgeführt wird, umfassend:
Übertragen an eine erste Basisstationseinrichtung (10A) einer Konfigurationsmenge für eine zweite Basisstationseinrichtung (10B) unter der ersten Basisstationseinrichtung (10A) und der zweiten Basisstationseinrichtung (10B), die für duale Konnektivität verwendet werden, wobei das Übertragen Übertragen einer UEAssistancelnformation-Nachricht einschließt, die OverheatingAssistance-IE einschließt, welches die Konfigurationsmenge einschließt, und
wobei die Konfigurationsmenge von der ersten Basisstationseinrichtung (10A) an die zweite Basisstationseinrichtung (10B) übertragen wird.

## Revendications

1. Appareil (10A) de station de base, qui est un premier appareil (10A) de station de base, comprenant :
une unité de réception (120) configurée pour recevoir, depuis un terminal (20), une quantité de configurations pour un deuxième appareil (10B) de station de base parmi le premier appareil (10A) de station de base et le deuxième appareil (10B) de station de base qui sont utilisés pour une double connectivité, dans lequel l'unité de réception (120) est configurée pour recevoir un message UEAssistancelnformation incluant une IE OverheatingAssistance qui inclut la quantité de configurations ;
et
une unité de transmission (110) configurée pour transmettre la quantité de configurations au deuxième appareil (10B) de station de base.

2. Appareil (10A) de station de base tel que revendiqué dans la revendication 1,
dans lequel la quantité de configurations est un nombre de cellules secondaires (SCells).

3. Terminal (20) comprenant :
une unité de transmission (210) configurée pour transmettre, à un premier appareil (10A) de station de base, une quantité de configurations pour un deuxième appareil (10B) de station de base parmi le premier appareil (10A) de station de base et le deuxième appareil (10B) de station de base qui sont utilisés pour une double connectivité,
dans lequel la quantité de configurations est transmise du premier appareil (10A) de station de base au deuxième appareil (10B) de station de base et dans lequel l'unité de transmission (210) est configurée pour transmettre un message UEAssistancelnformation incluant une IE OverheatingAssistance qui inclut la quantité de configurations.

4. Terminal (20) tel que revendiqué dans la revendication 3,
dans lequel la quantité de configurations est un nombre de configurations réduit pour traiter la surchauffe du terminal.

5. Procédé de transmission mis en œuvre par un premier appareil (10A) de station de base, comprenant :
la réception, depuis un terminal (20), d'une quantité de configurations pour un deuxième appareil (10B) de station de base parmi le premier appareil (10A) de station de base et le deuxième appareil (10B) de station de base qui sont utilisés pour une double connectivité, dans lequel la réception inclut la réception d'un message UEAssistancelnformation incluant une IE OverheatingAssistance qui inclut la quantité de configurations ; et
la transmission de la quantité de configurations au deuxième appareil (10B) de station de base.

6. Procédé de transmission mis en œuvre par un terminal (20), comprenant :
la transmission, à un premier appareil (10A) de station de base, d'une quantité de configurations pour un deuxième appareil (10B) de station de base parmi le premier appareil (10A) de station de base et le deuxième appareil (10B) de station de base qui sont utilisés pour une double connectivité, dans lequel la transmission inclut la transmission d'un message UEAssistancelnformation incluant une IE OverheatingAssistance qui inclut la quantité de configurations, et
dans lequel la quantité de configurations est transmise du premier appareil (10A) de station de base au deuxième appareil (10B) de station de base.
